# EUROPEAN PATENT APPLICATION

(11) **EP 1 640 788 A1**
(43) Date of publication of application: **29.03.2006**
(21) Application number: 05020729.9
(22) Date of filing: 22.09.2005
(51) Int. Cl.: G02F 1/01, G02F 1/225, G02F 1/035

(54) **Method of driving Mach-Zehnder light modulator and light modulating device**

(30) Priority: 28.09.2004 JP 2004282587; 18.08.2005 JP 2005237920
(71) Applicant: AISIN SEIKI KABUSHIKI KAISHA, Kariya-shi, Aichi-ken 448-8650 (JP)
(72) Inventor: Tateishi, Yosuke, Kariya-shi Aichi-ken 448-8650 (JP)
(74) Representative: TBK-Patent

(57) **Abstract**

A method of driving a mach-zehnder light modulator (1) includes alternately applying modulation signal voltages (21) having a positive effective value (211) and a negative effective value (212) that are equal to each other as modulation signal voltages to a modulation electrode (12) of the mach-zehnder light modulator (1). The mach-zehnder light modulator (1) includes a mach-zehnder optical waveguide (11) disposed on a base (30) exhibiting an electro-optical effect and the modulation electrode (12) for applying thereto the modulation signal voltages (21) in directions crossing the mach-zehnder optical waveguide (11). The mach-zehnder light modulator (1) modulates the intensity of an output light in accordance with the modulation signal voltages (21) which are applied to the modulation electrode (12).

## Description

### BACKGROUND OF THE INVENTION

### 1. Field of the Invention

The present invention relates to a method of driving a mach-zehnder light modulator having a characteristic of modulating the intensity of input light, and a light modulating device including a light modulator driven by the driving method.

### 2. Description of the Related Art

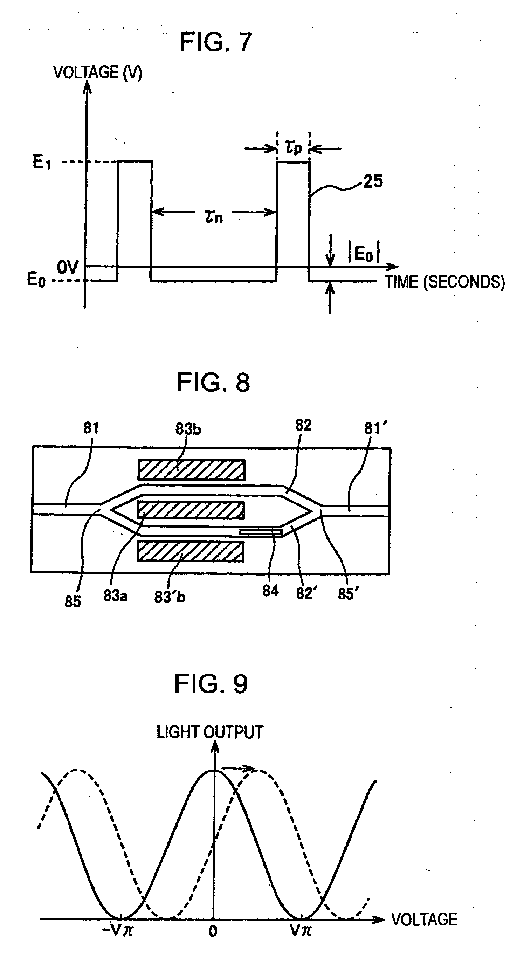

As shown in Fig. 8, in a mach-zehnder light modulator fabricated by using electro-optical crystals (typified by LiNbO₃) for a substrate, one input waveguide 81 is branched into two interference arm waveguides 82 and 82' at a Y branching portion 85, and the two interference arm waveguides 82 and 82' intersect to form one output waveguide 81' at a Y branching portion 85'. In addition, a signal electrode 83a is disposed between the two interference arm waveguides 82 and 82' and opposing electrodes 83b and 83'b are disposed on respective outer sides of the interference arm waveguides 82 and 82' to apply opposite electrical fields to the interference arm waveguides 82 and 82' (refer to, for example, Japanese Unexamined Patent Application Publication No. 11-52315). A signal light I₀ input to the input waveguide 81 is divided into two equal signal lights I₀/2 at the Y branching portion 85, and the signal lights I₀/2 propagate through the interference arm waveguides 82 and 82'. Then, the signal lights I₀/2 are combined at the Y branching portion 85' and the resulting signal light is output from the output waveguide 81'. The two interference arm waveguides 82 and 82' are ordinarily formed with the same length, and exhibit an intensity modulation characteristic indicated by a solid modulation curve shown in Fig. 9. In other words, when the opposing electrodes 83b and 83'b are grounded and a modulation signal voltage E₁ = 0 V which causes a light output to become a maximum is applied to the signal electrode 83a, a difference between the phases of the two equally divided signal lights propagating through the interference arm waveguides 82 and 82' is not produced. Therefore, the two equally divided signal lights are added as they are, so that the signal light I₀ output from the output waveguide 81' is set on (that is, the output is "1''). In contrast, when a modulation signal voltage E₀ = Vπ which causes the light output to become a minimum (that is, the voltage Vπ which causes a phase difference π to occur between the phases of the two equally divided signal lights) is applied to the signal electrode 83a, even if the two equally divided signal lights are combined at the Y branching portion 85', they cancel each other out, so that the signal light output from the output waveguide 81' is set off (that is, the output is "0"). Therefore, a ratio between an optical extinction when the modulation signal voltage E₁ has been applied and an optical extinction when the modulation signal voltage E₀ has been applied (that is, an on-off extinction ratio) becomes a maximum.

Ideally, the modulator is formed as mentioned above. However, it is not actually possible to form the two interference arm waveguides 82 and 82' with, for example, the same length, the same cross-sectional shape, and the same refractive index, and at exact corresponding positions with respect to the electrode. Therefore, the mach-zehnder light modulator is such that the solid modulation curve shown in Fig. 9 is shifted in the direction of an arrow which is parallel to the horizontal axis, so that the mach-zehnder light modulator has an intensity modulation characteristic indicated by a dotted modulation curve shown in Fig. 9. Moreover, the shift amount is influenced by, for example, the manufacturing process of individual light modulators. Therefore, the shift amount cannot be made the same. To overcome this problem, a portion 84 of the interference arm waveguide 82' is doped with a dopant differing from that with which other portions of the interference arm waveguide 82' are doped, so that the shift amount is adjusted, thereby causing the modulation curve to shift back to the location of the solid modulation curve.

However, when the modulation signal voltages E₀ and E₁ each contain a direct-current (DC) component, what is called a DC drift causing the extinction ratio to be reduced due to a shift in an operation point occurs. When the DC voltage E₀ = Vπ is applied to the signal electrode 83a, external fields traveling towards the respective opposing electrodes 83b and 83'b are generated from the signal electrode 83a, and a negative electric charge is accumulated between the signal electrode 83a and the interference arm waveguide 82 and between the signal electrode 83a and the interference arm waveguide 82', and a positive electric charge is accumulated between the opposing electrodes 83b and 83'b and the respective interference arm waveguides 82 and 82'. The positive and negative electric charges cause internal electrical fields traveling towards the signal electrode 83a from the opposing electrodes 83b and 83'b to be generated. Since the external electrical fields and internal electrical fields travel in opposite directions, this case is equivalent to when a voltage of (E₀ - ΔE₀ ≠ Vπ) is applied to the signal electrode 83a (where the internal electrical fields are ΔE₀). Therefore, the signal light is not set off (output is not "0"), thereby reducing the extinction ratio.

As mentioned above, when the related mach-zehnder light modulator is driven by modulation signal voltages including DC components, a DC drift occurs, causing the extinction ratio to be reduced.

### SUMMARY OF THE INVENTION

Accordingly, it is an object of the present invention to provide a method of driving a mach-zehnder light modulator which does not cause a DC drift to occur even if the light modulator is driven by a modulation signal voltage including a DC component, and a light modulating device which is achieved by this driving method.

To this end, according to a first aspect of the present invention, there is provided a method of driving a mach-zehnder light modulator including alternately applying modulation signal voltages having equal positive and negative effective values as modulation signal voltages to a modulation electrode of the mach-zehnder light modulator. The mach-zehnder light modulator includes a mach-zehnder optical waveguide disposed on a base exhibiting an electro-optical effect and the modulation electrode for applying thereto the modulation signal voltages in directions crossing the mach-zehnder optical waveguide. The mach-zehnder light modulator modulates the intensity of an output light in accordance with the modulation signal voltages which are applied to the modulation electrode.

For example, if, first, a DC voltage (positive DC voltage) set in one of directions crossing the mach-zehnder optical waveguide (here, this direction is called a "positive direction," and a direction opposite to the positive direction is called a "negative direction") is applied, a positive electric charge accumulates at a portion of a base situated at a positive-direction side of the mach-zehnder optical waveguide, and a negative electric charge accumulates at a portion of the base situated at a negative-direction side of the mach-zehnder optical waveguide. As a result, an internal electric field ΔE crossing the mach-zehnder optical waveguide and traveling towards the negative-direction side from the positive-direction side is generated at the base where the mach-zehnder optical waveguide is formed. Next, when a DC voltage (negative DC voltage) set in the other of the directions crossing the mach-zehnder optical waveguide (here, this direction is called the "negative direction," and the direction opposite to the negative direction is called the "positive direction") is applied, a negative electric charge accumulates at a portion of the base situated at the positive-direction side of the mach-zehnder optical waveguide, and a positive electric charge accumulates at a portion of the base situated at the negative-direction side of the mach-zehnder optical waveguide. As a result, an internal electric field ΔE' crossing the mach-zehnder optical waveguide and traveling towards the positive-direction side from the negative-direction side is generated.

More specifically, by disposing a signal electrode as a modulation electrode on one side of the mach-zehnder optical waveguide and an opposing electrode as a modulation electrode on the other side of the mach-zehnder optical waveguide, it is possible to apply voltages in the directions crossing the mach-zehnder optical waveguide. In this case, when a positive DC voltage is applied in the direction of the opposing electrode from the signal electrode, a negative electric charge accumulates between the mach-zehnder optical waveguide and the signal electrode, and a positive electric charge accumulates between the mach-zehnder optical waveguide and the opposing electrode. In contrast, when a negative DC voltage is applied in the direction of the opposing electrode from the signal electrode, a positive electric charge accumulates between the mach-zehnder optical waveguide and the signal electrode, and a negative electric charge accumulates between the mach-zehnder optical waveguide and the opposing electrode.

Here, if an effective value of the positive DC voltage and an effective value of the negative DC voltage are equal, an amount of electric charge accumulated when the positive voltage is applied and an amount of electric charge accumulated when the negative voltage is applied are equal, so that the generated internal electric fields ΔE and ΔE', which are equal and travel in opposite directions, cancel each other out. Therefore, alternately applying the positive DC voltage and the negative DC voltage makes it possible to prevent a DC drift.

In a first form according to the first aspect, when a vertical axis represents light output and a horizontal axis represents the modulation signal voltages, an intensity modulation characteristic of the mach-zehnder light modulator indicating a relationship between the modulation signal voltages that are applied to the modulation electrode and the intensity of the output light is represented by a modulation curve which is a periodic curve having a period λ in a horizontal axis direction and which has Vπ and -Vπ as (λ/2) voltages that are symmetrical with respect to an origin of 0 V.

Since the modulation signal voltages comprise pulses in which positive and negative amplitudes Vπ and -Vπ are repeated, it becomes easier to generate the modulation signal voltages.

In a second form according to the first aspect, when a vertical axis represents light output and a horizontal axis represents the modulation signal voltages, an intensity modulation characteristic of the mach-zehnder light modulator indicating a relationship between the modulation signal voltages which are applied to the modulation electrode and the intensity of the output light is represented by a modulation curve which is a periodic curve having a period λ in a horizontal axis direction and which is obtained by shifting a modulation curve having Vπ and -Vπ as (λ/2) voltages that are symmetrical with respect to an origin of 0 V in the horizontal axis direction by an odd multiple of (λ/4).

Since the modulation signal voltages comprise pulses in which positive and negative amplitudes Vπ/2 and -Vπ/2 are repeated, it becomes even easier to generate the modulation signal voltages.

In a third form according to the first aspect, the modulation signal voltages comprise repetitive signal pulses having a DC bias shift voltage added thereto. The repetitive signal pulses has a base line of 0 V. The DC bias shift voltage negatively shifts the base line.

Even if the modulation curve, which is a periodic curve having a period λ, does not include (λ/2) voltages which are symmetrical with respect to the origin, it is possible to produce modulation signal voltages whose duty ratio between on and off ("1" and "0") of the light modulator can be arbitrarily set and which have positive and negative effective values that are equal.

In a fourth form according to the first aspect, the modulation signal voltages are such that a first pulse and a second pulse are alternately repeated. The first pulse has a positive first voltage value causing the intensity of the output light to be a maximum. The second pulse has a negative second voltage value causing the intensity of the output light to be a minimum.

It is possible to obtain a light output having a duty ratio determined by the width of the first pulse and the width of the second pulse.

In a fifth form according to the first form, the modulation signal voltages are such that positive and negative pulses whose amplitudes are the Vπ are alternately repeated, with a 0 V interval existing between the positive and negative pulses.

By controlling the duty ratio for the pulse width and the pulse interval (0 V interval), it is possible to arbitrarily control the duty ratio.

In a sixth form according to the second form, the modulation signal voltages are such that positive and negative pulses whose amplitudes are 1/2 of the Vπ are alternately repeated.

Since the amplitudes of the modulation signal voltages are Vπ/2, the amount of accumulated electric charge is small, so that a DC drift is further prevented from occurring.

According to a second aspect of the present invention, there is provided a light modulating device including a mach-zehnder light modulator and a modulation signal voltage generator. The mach-zehnder light modulator includes a mach-zehnder optical waveguide disposed on a base exhibiting an electro-optical effect and a modulation electrode for applying thereto modulation signal voltages in directions crossing the mach-zehnder optical waveguide. The mach-zehnder light modulator modulates the intensity of an output light in accordance with the modulation signal voltages which are applied to the modulation electrode. The modulation signal voltage generator alternately applies modulation signal voltages having equal positive and negative effective values as the modulation signal voltages to the modulation electrode.

In a first form according to the second aspect, the mach-zehnder light modulator has, as an intensity modulation characteristic indicating a relationship between the modulation signal voltages that are applied to the modulation electrode and the intensity of the output light, an intensity modulation characteristic which is represented by a modulation curve which is a periodic curve having a period λ in a horizontal axis direction and which has Vπ and -Vπ as (λ/2) voltages that are symmetrical with respect to an origin of 0 V, when a vertical axis represents light output and a horizontal axis represents the modulation signal voltages.

In a second form according to the second aspect, the mach-zehnder light modulator has, as an intensity modulation characteristic indicating a relationship between the modulation signal voltages which are applied to the modulation electrode and the intensity of the output light, an intensity modulation characteristic which is represented by a modulation curve which is a periodic curve having a period λ in a horizontal axis direction and which is obtained by shifting a modulation curve having Vπ and -Vπ as (λ/2) voltages that are symmetrical with respect to an origin of 0 V in the horizontal axis direction by an odd multiple of (λ/4), when a vertical axis represents light output and a horizontal axis represents the modulation signal voltages.

In a third form according to the second aspect, the modulation signal voltage generator has a signal pulse generating circuit and a DC bias shift circuit. The signal pulse generating circuit generates repetitive signal pulses having a base line of 0 V. The DC bias shift circuit generates a DC bias shift voltage which is added to the repetitive signal pulses generated from the signal pulse generating circuit to negatively shift the base line.

In a fourth form according to the second aspect, the modulation signal voltages are such that a first pulse and a second pulse are alternately repeated. The first pulse has a positive first voltage value causing the intensity of the output light to be a maximum. The second pulse has a negative second voltage value causing the intensity of the output light to be a minimum.

In a fifth form according to the first form, the modulation signal voltages are such that positive and negative pulses whose amplitudes are the Vπ are alternately repeated, with a 0 V interval existing between the positive and negative pulses.

In a sixth form according to the second form, the modulation signal voltages are such that positive and negative pulses whose amplitudes are 1/2 of the Vπ are alternately repeated.

Since the positive and negative effective values of the modulation signal voltages are equal, the internal electric field generated by the positive effective value and the internal electric field generated by the negative effective value are equal in magnitude and in opposite directions, so that they cancel each other out. Therefore, a DC drift no longer occurs. This makes it possible to restrict a reduction in the on/off extinction ratio.

### BRIEF DESCRIPTION OF THE DRAWINGS

Fig. 1 is a schematic view of the structure of a light modulating device according to an embodiment of the present invention;
Fig. 2 illustrates the operation of the light modulating device when a modulation curve of a light modulator is a periodic curve having a period λ and has half-wave voltages Vπ and -Vx which are symmetrical with respect to an origin of 0 V;
Fig. 3 illustrates the operation of the light modulating device when the modulation curve of the light modulator which is a periodic curve having the period λ and has the half-wave voltages Vπ and -Vπ which are symmetrical with respect to the origin of 0 V is shifted by an odd multiple of (λ/4);
Fig. 4 illustrates the operation of the light modulating device when the modulation curve of the light modulator which is a periodic curve having the period λ and has the half-wave voltages Vπ and -Vπ which are symmetrical with respect to the origin of 0 V is shifted other than by an integral multiple of (λ/4);
Fig. 5 is a schematic view of the structure of an optical transmitter used in a light modulating device according to an example;
Fig. 6 is a block diagram of a modulation signal voltage generator in the optical transmitter according to the example;
Fig. 7 shows a modulation signal voltage waveform generated from the modulation signal generator in the optical transmitter according to the example;
Fig. 8 is a plan view of a related mach-zehnder light modulator; and
Fig. 9 shows modulation curves indicating the relationship between modulation signal voltage and output light.

### DESCRIPTION OF THE PREFERRED EMBODIMENT

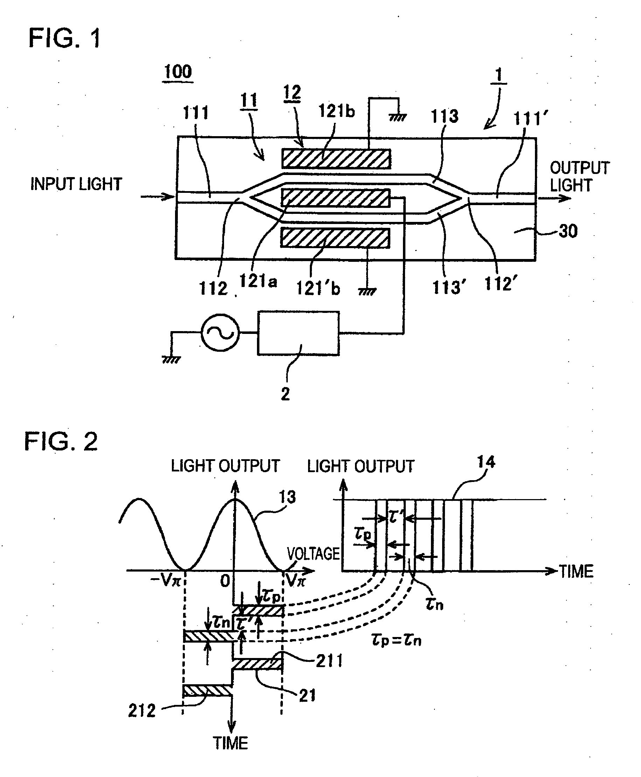

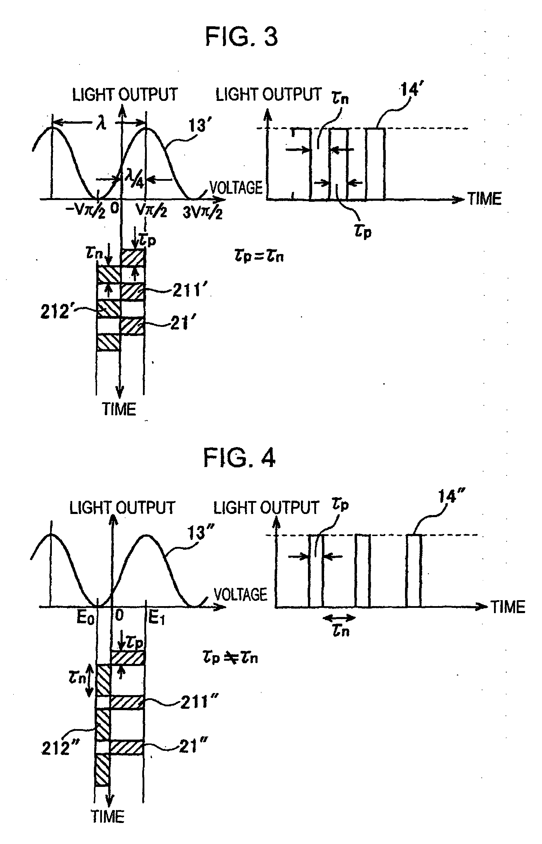

An embodiment of the present invention will be described with reference to the drawings. Fig. 1 is a schematic view of the structure of a light modulating device according to the present invention. Fig. 2 illustrates the operation of the light modulating device when a modulation curve of a light modulator is a periodic curve having a period λ and has half-wave voltages Vπ and -Vπ which are symmetrical with respect to an origin of 0 V. Fig. 3 illustrates the operation of the light modulating device when the modulation curve of the light modulator which is a periodic curve having the period λ and has the half-wave voltages Vn and -Vπ which are symmetrical with respect to the origin of 0 V is shifted by an odd multiple of (λ/4). Fig. 4 illustrates the operation of the light modulating device when the modulation curve of the light modulator which is a periodic curve having the period λ and has the half-wave voltages Vπ and -Vπ which are symmetrical with respect to the origin of 0 V is shifted other than by an integral multiple of (λ/4).

A light modulating device 100 according to the present invention includes a mach-zehnder light modulator 1 and a modulation signal voltage generator 2. The light modulator 1 includes a mach-zehnder optical waveguide 11 formed on a base 30 exhibiting an electro-optical effect, and a modulation electrode unit 12 for applying modulation signal voltages to the mach-zehnder optical waveguide 11. The modulation signal voltage generator 2 applies the modulation signal voltages to the modulation electrode unit 12. The mach-zehnder light modulator 1 modulates the intensity of an output light in accordance with the modulation signal voltages applied to the modulation electrode unit 12. In contrast, the modulation signal voltage generator 2 alternately applies modulation signal voltages having positive and negative effective values that are equal to the modulation electrode unit 12. In the mach-zehnder optical waveguide 11, one input waveguide 111 is divided into two interference arm waveguides 113 and 113' at a Y-branching portion 112, and the waveguides 113 and 113' intersect at a Y-branching portion 112' to form one output waveguide 111'. The modulation electrode unit 12 includes a signal electrode 121a and opposing electrodes 121b and 121'b. The signal electrode 121a is disposed between the two interference arm waveguides 113 and 113'. The interference arm waveguides 113 and 113' are interposed between the opposing electrodes 121b and 121'b.

In order to form the mach-zehnder optical waveguide 11 on the base 30 formed of a material exhibiting an electro-optical effect (such as lithium niobate (LN: LiNbO₃) or lithium tantalate (LT: LiTaO₃)), a photoresist, which is used for transferring and forming a waveguide pattern, is first applied by using, for example, a spin coater. Next, using a photo-mask on which the symmetrical waveguide is formed, exposure and development are carried out to form the waveguide pattern. Next, in order to form the waveguide, for example, titanium is evaporated, and the photoresist and the titanium on the photoresist are removed. Next, the base 30 is heated to a temperature of from 900 to 1100°C and titanium is subjected to thermal diffusion, so that the mach-zehnder optical waveguide 11 is formed.

In order to form the modulation electrode unit 12 on the base 30, first, photoresist, which is used for transferring an electrode pattern, is applied by using a spin coater. Using a photo-mask on which the electrode pattern is formed, exposure and development are carried out in order to form the electrode pattern. Next, for example, gold plating is carried out by an electrical plating method, so that gold electrodes (the signal electrode 121a and the opposing electrodes 121b and 121'b) are formed.

For example, by making the optical lengths (= refractive index x length) of the interference arm waveguides 113 and 113' equal, it is possible for the light modulator 1 to have a modulation curve 13 whose Vπ voltages are symmetrical with respect to an origin as shown in Fig. 2. When the interference arm waveguides 113 and 113' are fabricated so that L-L' = (λ/4) x (2n + 1) (where the optical length of the interference arm waveguide 113 is L, the optical length of the interference arm waveguide 113' is L', the period of the modulation curve is λ, and, for example, n is an integer), it is possible to produce the light modulator 1 whose modulation curve 13' is shifted by (λ/4) x (2n + 1) as shown in Fig. 3. Here, n = 0, 1, 2, 3, ..., and n = 0 in Fig. 3). In addition, for example, as in Japanese Unexamined Patent Application Publication No. 11-52315 referred to in the Description of the Related Art, by adjusting the shift amount by doping a portion of the interference arm waveguide 113' with a dopant differing from that with which the other portions of the interference arm waveguide 113' are doped, it is possible for the light modulator 1 to have a modulation curve 13" which is shifted by an arbitrary amount other than by an integral multiple of (λ/4) as shown in Fig. 4.

The modulation signal voltage generator 2 alternately applies the modulation signal voltages having positive and negative effective values that are equal to the signal electrode 121a of the light modulator 1, and generates predetermined modulation signal voltages having positive and negative effective values that are equal. When the light modulator 1 has the modulation curve 13 whose Vπ voltages are symmetrical with respect the origin as shown in Fig. 2, the modulation signal voltage generator 2 used is one which generates modulation signal voltages 21 in which a positive pulse having an amplitude Vπ and a width τp and a negative pulse having an amplitude Vπ and a width τn are alternately repeated at an interval τ', and in which τp = τn. The effective values used in the present invention are, for example, in the aforementioned case such that an effective value 211 = Vπ {τp/(τp + 2τ' + τn)}^{1/2} and an effective value 212 = Vπ {τn/(τp + 2τ' + τn)}^{1/2}.

When the light modulator 1 has, as shown in Fig. 3, the modulation curve 13' obtained by shifting the modulation curve 13 shown in Fig. 2 by λ/4, the modulation signal voltage generator 2 used is one which generates modulation signal voltages 21' in which a positive pulse having an amplitude Vπ/2 and a width τp and a negative pulse having an amplitude Vπ/2 and a width τn are alternately repeated as shown in Fig. 3, and in which τp = τn.

When the light modulator 1 has, as shown in Fig. 4, the modulation curve 13" obtained by shifting the modulation curve 13 shown in Fig. 2 by any amount other than by an integral multiple of (λ/4), the modulation signal voltage generator 2 used is one which generates modulation signal voltages 21" in which a positive pulse having an amplitude. E₁ and a width τP and a negative pulse having an amplitude E₀ and a width τn are alternately repeated as shown in Fig. 4, and in which τp ≠ τn. Here, E₀ (< 0) is a voltage causing a light output to be "0" (that is, a minimum), and E₁ is a voltage causing a light output to be "1" (that is, a maximum), and E₁τp^{½} = E₀τn^{½}.

It is desirable that the modulation signal voltage generator 2 include a signal pulse generating circuit and a DC bias shift circuit. The signal pulse generating circuit generates repetitive signal pulses whose base line is 0 V. The DC bias shift circuit generates a DC bias shift voltage added to the repetitive signal pulses generated by the signal pulse generating circuit to negatively shift the base line.

For example, when E₁ = 2|E₀| in the modulation curve 13" in Fig. 4, it is necessary to generate the modulation signal voltages 21" where 4τp = τn, that is, a duty ratio τp:τn = 1:4. This is achieved as follows. The signal pulse generating circuit generates the repetitive signal pulses whose base line is 0 V, whose amplitudes are (E₁-E₀), and whose widths are τp, and which are separated by a pulse interval τn. The DC bias shift circuit generates a bias voltage of E₀. When these are added, the modulation signal voltages 21" in which a positive pulse whose amplitude is E₁ and whose width is τp and a negative pulse whose amplitude is E₀ and whose width is τn are alternately repeated are formed. Although in the aforementioned example, E₁ is positive and E₀ is negative, E₁ may be negative and E₀ may be positive. In this case, the modulation signal voltages become those in which a positive pulse whose amplitude is E₁ and whose width of τn is alternately repeated. Although, in the foregoing description, in the beginning, the light modulator has a particular modulation curve (E₁ = 2|E₀|), and generates modulation signal voltages whose modulation signal duty ratio τp:τn is 1:4 so as not to cause any DC drift, these may be reversed. More specifically, for example, a light modulator having a duty ratio τp:τn = 1:1.5 for the modulation signals and a light output characteristic is constructed as follows. The modulation signal generator 2 which is one which generates the modulation signal voltages 21" in which a positive pulse having the amplitude E₁ and the width τp and a negative pulse having the amplitude E₀ and the width τn are repeated, when the signal pulse generating circuit generates repetitive signal pulses whose amplitudes are (E₁-E₀) and whose widths are τp, and which are separated by the pulse interval τn (= 1.5τp), the DC bias shift circuit generates a bias voltage E₀, and these are added. Next, by providing the light modulator 1 having the modulation curve 13 " in which E₁ = (1.5)^{½} |E₀|, it is possible to achieve a light output characteristic having a duty ratio of 1:1.5. Although, even in this case, E₁ is positive and E₀ is negative, E₁ may be negative and E₀ may be positive.

Therefore, when the modulation signal voltage generator 2 includes a signal pulse generating circuit and a DC bias shift circuit, it is possible to provide a light modulating device which can generate modulation signal voltages having positive and negative effective values that are equal at any duty ratio, which has a light output characteristic of any duty ratio, and which does not allow a DC drift to occur.

Although the signal pulse generating circuit is described as generating a rectangular wave signal pulse, it is not limited to that generating a rectangular wave signal pulse. It may generate a different type of signal pulse, such as a triangular wave pulse, a sinusoidal wave pulse, a full-wave waveform produced by rectifying AC voltage, a half-wave waveform produced by rectifying AC voltage, or a periodic function wave.

Next, the operations and advantages of the light modulator will be described. In the case where the light modulator 1 has the modulation curve 13 having the Vπ voltages that are symmetrical with respect to the origin as shown in Fig. 2, when the modulation signal voltage generator 2 applies to the signal electrode 121a of the modulator 1 the modulation signal voltages 21 in which a positive pulse whose amplitude is Vπ and whose width is τp and a negative pulse whose amplitude is Vπ and whose width is τn are alternately repeated at the interval τ' and in which τp = τn, the voltages Vπ and -Vπ are applied when the positive pulse and negative pulse are being generated, that is, at τp and τn, respectively. Therefore, at these times, the light outputs are "0." At a time other than these times, that is, at τ', a voltage of 0 V is applied, so that the light output is "1." As a result, a light output waveform 14 shown in Fig. 2 is generated. Since τp = τn , the positive effective value 211, which is equal to Vπ {τp/(τp + 2τ' + τn)}^{½}, and the negative effective value 212, which is equal to Vπ {τn/(τp + 2τ' + τn)}^{½}, are equal to each other, the internal electrical field generated by electric charges accumulated by the application of the positive pulse and the internal electrical field generated by electric charges accumulated by the application of the negative pulse travel in opposite directions and are equal in magnitude. Therefore, the internal electrical fields cancel each other out, thereby preventing a DC drift. In addition, in this case, since the positive effective value 211 and the negative effective value 212 can be equal even if the interval τ' between the positive and negative pulses is arbitrarily set, a light output characteristic of any duty ratio τ':τp = τ': τn can be achieved. Here, the intensity modulation characteristic of the mach-zehnder light modulator is such that the output light becomes a maximum when the voltage is 0 V and becomes a minimum when the voltage is Vπ or -Vπ. However, it may be such that the output light becomes a minimum when the voltage is 0 V and becomes a maximum when the voltage is Vπ or -Vπ. Even in this case, the same operations as those described above can be achieved by generating modulation signal voltages having positive and negative effective values that are equal.

In the case where the light modulator 1 has the modulation curve 13' obtained by shifting the modulation curve 13 shown in Fig. 2 by an odd multiple of λ/4, when the modulation signal voltage generator 2 applies to the signal electrode 121a of the modulator 1 the modulation signal voltages 21' in which a positive pulse having the amplitude Vπ/2 and the width τp and a negative pulse having the amplitude Vπ/2 and the width τn are alternately repeated and in which τp = τn, the voltage Vπ/2 is applied when the positive pulse is being generated, that is, at τp, so that the light output is "1," whereas the voltage -Vπ/2 is applied when the negative pulse is being generated, that is, at τn, so that the light output is "0". As a result, a light output waveform 14' shown in Fig. 3 is generated. Since even in this case a positive effective value 211' = (Vπ/2) {τp/ (τp + τn)}^{1/2} and a negative effective value 212' = (Vπ/2){τn/(τp + τn)}^{1/2} and τp = τn, the effective value 211' = the effective value 212'. Therefore, the internal electrical field generated by electric charges accumulated by the application of the positive pulse and the internal electrical field generated by electric charges accumulated by the application of the negative pulse travel in opposite directions and are equal in magnitude. Therefore, the internal electrical fields cancel each other out, thereby preventing a DC drift. In addition, in this case, since the applied voltages are only half of the voltage Vπ, problems regarding insulation and noise can be easily overcome and the amount of accumulated electric charge is small, thereby further preventing the DC drift. In this case, the duty ratio τp:τn of the light output characteristic 14' is fixed at 1:1. Here, the intensity modulation characteristic of the mach-zehnder light modulator is such that the output light becomes a maximum when the voltage is -Vπ/2 and becomes a minimum when the voltage is Vπ/2. However, it may be such that the output light becomes a minimum when the voltage is -Vπ/2 and becomes a maximum when the voltage is Vπ/2. Even in this case, the same operations as those described above can be achieved by generating modulation signal voltages having positive and negative effective values that are equal.

In the case where the light modulator 1 has, as shown in Fig. 4, the modulation curve 13" obtained by shifting the modulation curve 13 shown in Fig. 2 other than by an integral multiple of (λ/4), when the modulation signal voltage generator 2 applies to the signal electrode 121a of the modulator 1 the modulation signal voltage 21" in which a positive pulse whose amplitude is E₁ and whose width is τp and a negative pulse whose amplitude is E₀ and whose width is τn are alternately repeated and in which E₁τp^{1/2} = |E₀|πn^{1/2}, the voltage E₁ is applied when the positive pulse is being generated, that is, at τp, so that the light output is "1," whereas the voltage E₀ is applied when the negative pulse is being generated, that is, at τn, so that the light output is "0." As a result, a light output waveform 14" shown in Fig. 4 is formed. Even in this case, a positive effective value 211" = E₁(τp/(τp + τn))^{1/2} and a negative effective value 212" = |E₀|{τn/(τp + τₙ)}^{1/2}, and E₁τₚ^{1/2} = |E₀|τn^{1/2}. Therefore, the effective value 211" = the effective value 212". Consequently, the internal electrical field generated by electric charges accumulated by the application of the positive pulse and the internal electrical field generated by electric charges accumulated by the application of the negative pulse travel in opposite directions and are equal in magnitude. As a result, the internal electrical fields cancel each other out, thereby preventing a DC drift. Here, the duty ratio τp:τn of the light output characteristic can be arbitrarily selected.

### Example

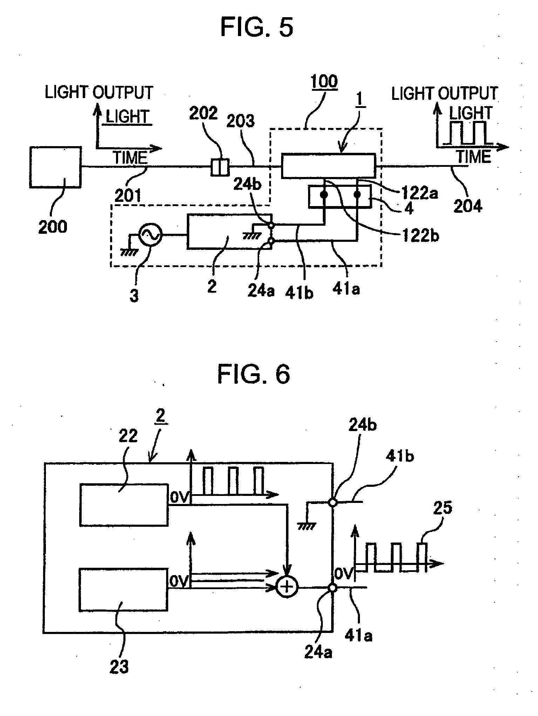

Fig. 5 illustrates the structure of an optical transmitter used in a light modulating device according to an example. Fig. 6 is a block diagram of a modulation signal voltage generator in the optical transmitter according to the example. Fig. 7 shows a modulation signal voltage waveform generated from the modulation signal generator in the light transmitter according to the example.

A light modulating device 100 according to the example includes an LN light modulator 1, a modulation signal voltage generator 2 for applying a modulation signal voltage to the LN light modulator 1, a subminiature type A (SMA) connector 4 connecting the modulation signal voltage generator 2 and the light modulator 1, and a power supply 3 of the modulation signal voltage generator 2. The light modulator 1 is designed and fabricated so as to have a modulation curve matching that of a modulation signal voltage generated from the modulation signal voltage generator 2, and has a modulation signal input pin 122a connected to a signal electrode (indicated by reference numeral 121a in Fig. 1) and a ground pin 122b connected to opposing electrodes (indicated by reference numerals 121b and 121'b in Fig, 1). The modulation signal voltage generator 2 includes a signal pulse generating circuit 22 and a DC bias shift circuit 23, and has a ground terminal 24b and an output terminal 24a for outputting the modulation signal voltage. The output terminal 24a of the modulation signal voltage generator 2 is connected to the modulation signal input pin 122a of the light modulator 1 through an SMA cable 41a and the SMA connector 4. The ground terminal 24b is connected to the ground pin 122b of the light modulator 1 through an SMA cable 41b and the SMA connector 4. Although, in the embodiment, the length of the SMA cables 41a and 41b is 20 cm, the length is determined considering the allowable current, voltage drop, and frequency characteristics.

In Fig. 5, reference numeral 200 denotes a light generator for inputting light to the light modulator 1. For example, a laser diode may be used for the light generator 200. When a laser diode is used, the polarized wave of generated light is a linearly polarized wave. Reference numeral 201 denotes an optical fiber for propagating light generated from the light generator 200. When the light generator 200 is a laser diode, the optical fiber is a polarization maintaining fiber having a length of 50 cm. The polarization maintaining fiber is used to maintain a polarization plane of the light generated from the light generator 200. Therefore, it may have any length as long as the length does not hinder its use. Reference numeral 203 denotes an optical fiber for inputting light to the light modulator 1, and reference numeral 202 denotes a connector for connecting the optical fibers 201 and 203. The optical fiber 203 is also a polarization maintaining fiber having a length of 50 cm and maintaining a polarization plane of light from the fiber 201, and may have any length as long as the length does not hinder its use. Reference numeral 204 denotes an optical fiber for outputting light exiting from the light modulator 1, and is a polarization maintaining fiber having a length of 50 cm. The polarization maintaining fiber is used to maintain a polarization plane of the light exiting from the light modulator 1, and may have any length as long as the length does not hinder its use. If it is not necessary to maintain a polarization plane of the light exiting from the light modulator 1, the optical fiber 204 may be a polarization independent single mode fiber.

Fig. 7 illustrates modulation signal voltages 25 generated by the modulation signal voltage generator 2. In Fig. 7, the horizontal axis represents the time, and the vertical axis represents the voltage level, τp is the time width (in seconds) of a positive signal pulse, τn is the time width (in seconds) of a negative signal pulse, E₁ (>0) is the pulse voltage level (amplitude, in V), |E₀| is the offset voltage level (in V), and E₁τp^{1/2} = |E₀|τn^{1/2}.

The modulation signal voltages 25 are generated as follows. The pulse generating circuit 22 generates repetitive signal pulses in which E₁τp^{1/2} = |E₀|τn^{1/2}, the base line is 0 V, the amplitudes are (E₁-E₀), the pulse width is τp, and the pulse interval is τn. The DC bias shift circuit 23 generates a bias voltage E₀ (< 0). These are combined to generate the modulation signal voltages 25 in which a positive pulse whose amplitude is E₁ and whose width is τp and a negative pulse whose amplitude is E₀ and whose width is τn are alternately repeated. Since the DC bias shift circuit 23 having a regulator and a variable resistor can change the bias voltage E₀, it is possible to achieve any duty ratio.

Using the light modulator 1 which is designed and fabricated so as to have a modulation curve whose modulation voltage causing the light output to be a maximum is E₁ and whose modulation voltage causing the light output to be a minimum is E₀, the modulation signal voltage generator 2 is made to apply the modulation signal voltages 25 in which a positive pulse whose amplitude is E₁ and whose width is τp and a negative pulse whose amplitude is E₀ and whose width τn are alternately repeated and in which E₁τp^{½} = |E₀|τn^{½}, so that a DC drift is prevented from occurring.

Next, specific examination results regarding the example will be described. The modulation signal voltages generated from the modulation signal voltage generator 2 are such that the effective value of the positive pulse and the effective value of the negative pulse are equal. In order to achieve E₁τp^{1/2} = |E₀|τn^{1/2}, the pulse generating circuit 22 of the modulation signal voltage generator 2 generates repetitive signal pulses in which the pulse width τp = 20 ns, the pulse interval τn = 6 µs, and the pulse amplitude (E₁-E₀) = (4 + 0.23). The DC bias shift circuit 23 generates a bias voltage E₀ = -0.23. These are added to generate the modulation signal voltages 25 in which a positive pulse whose amplitude is 4 V and whose width is 20 ns and a negative pulse whose amplitude is 0.23 V and whose width is 6 µs are alternately repeated.

The modulation signal voltage 25 is applied to the light modulator 1 designed and fabricated so as to have a modulation curve whose modulation voltage which causes the light output to be a maximum is E₁ = 4 V and whose modulation voltage which causes the light output to be a minimum is E₀ = -0.23 V. As a result, when the modulation signal voltage applied to the modulation signal input pin 122a connected to the signal electrode (indicated by reference numeral 121a in Fig. 1) is E₁ = 4.0 V, the light output becomes a maximum of "1" (that is, the light output is set on), so that the optical fiber 204 outputs light. When the modulation signal voltage applied to the modulation signal input pin 122a is E₀ = -0.23 V, the light output is a minimum of "0" (that is, the light output is set off), so that the light output from the optical fiber 204 is a minimum. The on-off duty ratio is 1:300.

When the light modulating device 100 according to the example is operated continuously for 8 hours, the on/off extinction ratio is not reduced, thereby making it possible to reduce a DC drift which causes the reduction of the extinction ratio. A high extinction ratio of 30 dB is obtained. This is because, since E₁τp^{½} = 4 x (20 × 10⁻⁹)^{½} = 5.66 x 10⁻⁴ and |E₀|τn^{½} = 0.23 x (6 x 10⁻⁶)^{½} = 5.63 × 10⁻⁴, E₁τp^{½}= |E₀|τn^{½} is substantially established, so that the effective values of the positive and negative pulses are equal. More specifically, this is because, when the effective values are calculated using an effective value formula, the effective value of the positive pulse is E₁ x {τp/(τp + τn)}^{½} = 4 × (20 × 10⁻⁹ / 6020 × 10⁻⁹)^{½} = 0.23, and the effective value of the negative pulse is E₀ x {τn/(τp + τn)}^{1/2} = 0.23 x (6000 x 10⁻⁹ / 6020 x 10⁻⁹)^{1/2} = 0.23, so that they are equal.

A method of driving a mach-zehnder light modulator (1) includes alternately applying modulation signal voltages (21) having a positive effective value (211) and a negative effective value (212) that are equal to each other as modulation signal voltages to a modulation electrode (12) of the mach-zehnder light modulator (1). The mach-zehnder light modulator (1) includes a mach-zehnder optical waveguide (11) disposed on a base (30) exhibiting an electro-optical effect and the modulation electrode (12) for applying thereto the modulation signal voltages (21) in directions crossing the mach-zehnder optical waveguide (11). The mach-zehnder light modulator (1) modulates the intensity of an output light in accordance with the modulation signal voltages (21) which are applied to the modulation electrode (12).

## Claims

1. A method of driving a mach-zehnder light modulator (1) comprising a mach-zehnder optical waveguide (11) disposed on a base exhibiting an electro-optical effect and a modulation electrode (12) for applying thereto modulation signal voltages in directions crossing the mach-zehnder optical waveguide (11), the mach-zehnder light modulator (1) modulating the intensity of an output light in accordance with the modulation signal voltages which are applied to the modulation electrode (12), the method comprising:
alternately applying modulation signal voltages having equal positive and negative effective values as the modulation signal voltages to the modulation electrode (12).

2. The method of driving a mach-zehnder light modulator (1) according to Claim 1, wherein, when a vertical axis represents light output and a horizontal axis represents the modulation signal voltages, an intensity modulation characteristic of the mach-zehnder light modulator (1) indicating a relationship between the modulation signal voltages that are applied to the modulation electrode (12) and the intensity of the output light is represented by a modulation curve which is a periodic curve having a period 1 in a horizontal axis direction and which has Vp and -Vp as (1/2) voltages that are symmetrical with respect to an origin of 0 V.

3. The method of driving a mach-zehnder light modulator (1) according to Claim 1, wherein, when a vertical axis represents light output and a horizontal axis represents the modulation signal voltages, an intensity modulation characteristic of the mach-zehnder light modulator (1) indicating a relationship between the modulation signal voltages which are applied to the modulation electrode (12) and the intensity of the output light is represented by a modulation curve which is a periodic curve having a period 1 in a horizontal axis direction and which is obtained by shifting a modulation curve having Vp and -Vp as (1/2) voltages that are symmetrical with respect to an origin of 0 V in the horizontal axis direction by an odd multiple of (1/4).

4. The method of driving a mach-zehnder light modulator (1) according to Claim 1, wherein the modulation signal voltages comprise repetitive signal pulses having a DC bias shift voltage added thereto, the repetitive signal pulses having a base line of 0 V, the DC bias shift voltage negatively shifting the base line.

5. The method of driving a mach-zehnder light modulator (1) according to Claim 1, wherein the modulation signal voltages are such that a first pulse and a second pulse are alternately repeated, the first pulse having a positive first voltage value causing the intensity of the output light to be a maximum, the second pulse having a negative second voltage value causing the intensity of the output light to be a minimum.

6. The method of driving a mach-zehnder light modulator (1) according to Claim 2, wherein the modulation signal voltages are such that positive and negative pulses whose amplitudes are said Vp are alternately repeated, with a 0 V interval existing between the positive and negative pulses.

7. The method of driving a mach-zehnder light modulator (1) according to Claim 3, wherein the modulation signal voltages are such that positive and negative pulses whose amplitudes are 1/2 of said Vp are alternately repeated.

8. A light modulating device (100) comprising a mach-zehnder light modulator (1) including a mach-zehnder optical waveguide (11) disposed on a base exhibiting an electro-optical effect and a modulation electrode (12) for applying thereto modulation signal voltages in directions crossing the mach-zehnder optical waveguide (11), the mach-zehnder light modulator (1) modulating the intensity of an output light in accordance with the modulation signal voltages which are applied to the modulation electrode (12), **characterized in that** the light modulating device (100) further comprises:
a modulation signal voltage generator (2) for alternately applying modulation signal voltages having equal positive and negative effective values as the modulation signal voltages to the modulation electrode (12).

9. The light modulating device (100) according to Claim 8, wherein the mach-zehnder light modulator (1) has, as an intensity modulation characteristic indicating a relationship between the modulation signal voltages that are applied to the modulation electrode (12) and the intensity of the output light, an intensity modulation characteristic which is represented by a modulation curve which is a periodic curve having a period 1 in a horizontal axis direction and which has Vp and -Vp as (1/2) voltages that are symmetrical with respect to an origin of 0 V, when a vertical axis represents light output and a horizontal axis represents the modulation signal voltages.

10. The light modulating device (100) according to Claim 8, wherein the mach-zehnder light modulator (1) has, as an intensity modulation characteristic indicating a relationship between the modulation signal voltages which are applied to the modulation electrode (12) and the intensity of the output light, an intensity modulation characteristic which is represented by a modulation curve which is a periodic curve having a period 1 in a horizontal axis direction and which is obtained by shifting a modulation curve having Vp and -Vp as (1/2) voltages that are symmetrical with respect to an origin of 0 V in the horizontal axis direction by an odd multiple of (1/4), when a vertical axis represents light output and a horizontal axis represents the modulation signal voltages.

11. The light modulating device (100) according to Claim 8, wherein the modulation signal voltage generator (2) has a signal pulse generating circuit (22) and a DC bias shift circuit (23), the signal pulse generating circuit (22) generating repetitive signal pulses having a base line of 0 V, the DC bias shift circuit (23) generating a DC bias shift voltage which is added to the repetitive signal pulses generated from the signal pulse generating circuit (22) to negatively shift the base line.

12. The light modulating device (100) according to Claim 8, wherein the modulation signal voltages are such that a first pulse and a second pulse are alternately repeated, the first pulse having a positive first voltage value causing the intensity of the output light to be a maximum, the second pulse having a negative second voltage value causing the intensity of the output light to be a minimum.

13. The light modulating device (100) according to Claim 9, wherein the modulation signal voltages are such that positive and negative pulses whose amplitudes are said Vp are alternately repeated, with a 0 V interval existing between the positive and negative pulses.

14. The light modulating device (100) according to Claim 10, wherein the modulation signal voltages are such that positive and negative pulses whose amplitudes are 1/2 of said Vp are alternately repeated.
